# EUROPEAN PATENT SPECIFICATION

(11) **EP 3 898 894 B1**
(45) Date of publication and mention of the grant of the patent: **09.09.2026**
(21) Application number: 19839145.0
(22) Date of filing: 20.12.2019
(51) Int. Cl.: C10G 1/00, C10G 1/08, C10G 1/10, C10G 47/02, C10G 47/26

(54) **PROCESS FOR POLYMER MIXTURE HYDROCONVERSION**
VERFAHREN ZUR HYDROUMWANDLUNG VON POLYMERGEMISCHEN
PROCÉDÉ D'HYDROCONVERSION DE MÉLANGE DE POLYMÈRES

(30) Priority: 21.12.2018 IT 201800020818
(43) Date of publication of application: 27.10.2021
(73) Proprietor: ENI S.p.A., 00144 Roma (IT); Versalis S.p.A., 20097 San Donato Milanese (MI) (IT)
(72) Inventor: BALDUCCI, Daniele, 20097 San Donato Milanese (MI) (IT); GUIDETTI, Stefania, 20097 San Donato Milanese (MI) (IT); SCAVELLO, Francesco, 46100 Mantova (IT); VECCHINI, Nicola, 46100 Mantova (IT); MARIANI, Paolo, 20097 San Donato Milanese (MI) (IT)
(74) Representative: Studio Torta S.p.A.
(86) International application number: PCT/IB2019/061213
(87) International publication number: WO 2020/129020

(56) References cited:
- CN-A- 106 520 168
- CN-A- 106 520 168
- JP-A- 2009 242 555
- JP-A- 2009 242 555
- US-B1- 6 190 542
- US-B1- 6 190 542
- MOHAMMAD FARHAT ALI ET AL: "Catalytic coprocessing of coal and petroleum residues with waste plastics to produce transportation fuels", FUEL PROCESSING TECHNOLOGY ELSEVIER BV, NL, vol. 92, no. 5, 10 January 2011 (2011-01-10), pages 1109 - 1120, XP028365536, ISSN: 0378-3820, [retrieved on 20110120], DOI: 10.1016/J.FUPROC.2011.01.006
- KARAGOZ ET AL: "Catalytic and thermal degradation of high-density polyethylene in vacuum gas oil over non-acidic and acidic catalysts", APPLIED CATALYSIS A: GENERAL ELSEVIER, AMSTERDAM, NL, vol. 242, no. 1, 10 March 2003 (2003-03-10), pages 51 - 62, XP004412667, ISSN: 0926-860X, DOI: 10.1016/S0926-860X(02)00505-7
- MOHAMMAD FARHAT ALI ET AL: "Catalytic coprocessing of coal and petroleum residues with waste plastics to produce transportation fuels", FUEL PROCESSING TECHNOLOGY, ELSEVIER BV, NL, vol. 92, no. 5, 10 January 2011 (2011-01-10), pages 1109 - 1120, XP028365536, ISSN: 0378-3820, [retrieved on 20110120], DOI: 10.1016/J.FUPROC.2011.01.006
- KARAGOZ S ET AL: "Catalytic and thermal degradation of high-density polyethylene in vacuum gas oil over non-acidic and acidic catalysts", APPLIED CATALYSIS A: GENERAL, ELSEVIER, AMSTERDAM, NL, vol. 242, no. 1, 10 March 2003 (2003-03-10), pages 51 - 62, XP004412667, ISSN: 0926-860X, DOI: 10.1016/S0926-860X(02)00505-7

## Description

### TECHNICAL FIELD

The present invention falls within the field of the chemical recycling processes of plastics which serve to valorise plastic materials otherwise destined for landfill or waste-to-energy disposal.

In particular, the present invention relates to a hydroconversion process by means of slurry technology which transforms mixtures of polymers or plastics, mainly, into hydrocarbons having a boiling temperature which varies in the range from 65°C to 170°C, also known as naphtha cut. The present invention falls within the scope of the depolymerization processes of plastics which can follow a molecular or chemical-type approach.

According to a molecular approach, the polymers are treated to obtain the monomers used at the outset. According to a chemical approach, instead, starting from a plastic it is possible to obtain building blocks of the petrochemical industry.

The present invention follows a chemical-type, chemical recycling approach, precisely because it starts from polymeric or plastic materials, to obtain mainly naphtha as a product, which is one of the main reactants for the production of plastics.

The proposed solution makes it possible to insert plastic materials in the circuit of the circular economy which would otherwise be destined for landfill or waste-to-energy disposal, positively impacting the reduction of the consumption of raw materials, both of fossil origin (polymeric materials of petroleum origin) and of vegetable origin (bio-based polymeric materials). In this way these materials are valorised at light hydrocarbon fractions through slurry hydroconversion technologies, for example the Eni Slurry Technology (EST) hydroconversion process. In the present patent application, the term "polymer mixtures" is meant as a solid mixture of one or more polymers, possibly containing additives of organic or inorganic origin.

In the present patent application, slurry phase is meant as a mixture of liquid and solid.

In the present patent application the term "purging" is meant as slurry-phase organic streams which contain a quantity of hydrocarbons having a boiling point greater than or equal to 540°C greater than 65% by weight, a quantity of asphaltenes greater than or equal to 20% by weight and characterised by the presence of solids contents greater than or equal to 4% by weight, the remainder being hydrocarbons having a boiling point comprised between 350°C and 500°C. Purge solids contain carbonaceous residues and metal compounds which can contain sulphides of transition metals, such as for example molybdenum, iron, nickel and vanadium, and having sub-millimetre dimensions.

For the purposes of this discussion, the term "solid" is meant as the insoluble fraction in tetrahydrofuran, indicated in this text by the acronym THF-i.

For the purposes of this discussion, the term "asphaltenes" is meant as the organic fraction soluble in tetrahydrofuran but insoluble in n-pentane.

Asphaltenes are classified according to their insolubility in n-paraffins (typically having 5 to 7 C5-C7 carbon atoms). Such compounds are generally constituted by nuclei of variously branched aromatic polycondensates and joined together through linear chains. These compounds can contain heteroatoms (S, N) therein which give them their polar nature.

In the present patent application the term *"cake"* is meant as a solid material at room temperature with glass-like characteristics (i.e. the appearance of the cake has the characteristics of glass) that make it easily grindable and consequently transportable even for long stretches without requiring a particular thermostatic control. This characteristic remains at temperatures ranging in the interval comprised between 50°C and 60°C.

The cake is hard at room temperature with a softening point comprised between 80°C and 100°C and a degree of penetration from 2 dmm to 5 dmm (dmm indicates decimillimetres). The softening point is the temperature at which the solid cake becomes soft and indicates the dependence of the cake's consistency on the temperature. The degree of penetration is measured according to the method ASTM-D5-06 and expresses the penetration the material undergoes at room temperature by a needle of known weight, in decimillimetres.

The consistency of the cake is due to the presence of solids (THFi) in greater concentration than the other streams and to the presence of asphaltenic compounds.

The cake contains solids as previously defined in the text of the present patent application.

The cake solids contain carbonaceous residues and metal compounds which can contain sulphides of transition metals, such as for example molybdenum, iron, nickel and vanadium, and having sub-millimetre dimensions.

In the present patent application the term maltenes is meant as the set of those compounds soluble both in Tetrahydrofuran and in n-pentane.

In the present patent application the term "styrene residue" is meant as a by-product of industrial origin deriving from the production of styrene and ethylbenzene and/or production of styrene polymers/copolymers. In particular it can contain aromatic organic compounds such as for example benzene, ethylbenzene, styrene, toluene, xylenes, propylbenzenes, alpha methyl styrene, polyethylbenzenes, styrene oligomers, oligomers of the SAN copolymer (styrene-acrylonitrile), polycyclic aromatic hydrocarbon compounds (naphthalene, anthracene, fluorantene, etc.); both short-chain hydrocarbons, i.e. with less than or equal to 12 carbon atoms, and long-chain, i.e. with carbon atoms equal to or greater than 12, mineral oils with carbon atoms comprised between 10 and 40; other unsaturated compounds such as for example acrylonitrile, and mixtures of the components listed above.

In the present patent application the term "phenolic residue" is meant as a by-product of industrial origin deriving from the production of phenol and its derivatives such as cyclohexanone and cyclohexanol. In particular the phenolic residue can contain aromatic organic compounds such as phenol, cresols, acetophenonene, cumene, alphamethyl styrene; both short-chain hydrocarbons, i.e. with less than or equal to 12 carbon atoms, and long-chain, i.e. with carbon atoms equal to or greater than 12, mineral oils with carbon atoms comprised between 10 and 40 and mixtures of the components listed above.

In the present patent application, all the operating conditions reported in the text must be understood as preferred conditions, even if not expressly declared.

For the purposes of the present discussion the term "comprise" or "include" also comprises the term "consist in" or "essentially consisting of".

For the purposes of the present discussion the definitions of the intervals always comprise the extremes unless otherwise specified.

Hydroconversion is usually carried out starting from heavy petroleum products and can be achieved by adopting different process schemes.

In the present patent application, heavy petroleum products is meant as crude oils, heavy crude oils, bitumen from bituminous sands, distillation residues, heavy distillation cuts, de-asphalting residues, synthetic oils produced by the Fischer Tropsch process, vegetable oils, coke-derived oils and oil shale, oils obtained by thermal decomposition of waste, polymers, biomass.

### BACKGROUND ART

The hydroconversion reactor can traditionally be fixed bed, ebullated bed or a slurry type bed. In a slurry reactor the catalyst is dispersed in the reaction medium and uniformly distributed inside the reactor itself.

A possible configuration of the hydroconversion process of heavy oil products consists of Eni Slurry Technology, owned by Eni and known by the acronym EST.

This configuration provides a hydroconversion section in which the reactors are loaded with a molybdenum-based catalyst of such dimensions as to be completely dispersed in the reaction medium, so as to be able to operate in the slurry phase. The reaction produces a head effluent which is subsequently sent to a separator section which includes at least one high-pressure and high-temperature (HP/HT) phase separator.

The vapour phase leaving the HP/HT separator is sent to a section from which naphtha, atmospheric gas oil (AGO), vacuum gas oil (VGO) and a gaseous stream rich in hydrogen, which contains C1-C4 gas, are recovered by condensation, and which is recycled into the hydroconversion section, except for a gaseous sample which can be introduced into the reaction effluent.

The bottom stream leaving the HP/HT separator is in slurry phase and is sent to a separation section which typically comprises a series of devices of decreasing pressure and temperature - such as a medium-pressure separator, an atmospheric distillation column and a vacuum distillation column - in order to separate the VGO from the heavier products.

The heavy bottom products contain an unconverted charge, catalyst and solid formed during the reaction. A part of said heavy products is recycled into the reaction section and the remainder is removed from the process as a purge stream. The purge stream can in turn be sent to a separation section to obtain a dense stream called Cake, and a less dense stream called Clarified. This latter stream can be recycled into the reaction section, the mixing section, or removed from the process.

The reaction products of an EST process can also be obtained exclusively in the vapour phase, as occurs in the EST Vapor Phase Outflow process (EST-VPO), described in several patent applications according to the progressive development of the technology. The applicant briefly summarises the patent applications that apply the EST-VPO technology below.

US 6 190 542 B1 discloses a catalytic multistage process for hydroconversion and refining hydrocarbon feed materials including coal, heavy oils, waste plastics and combinations thereof, for producing mainly clean low-boiling hydrocarbon liquid fuel products. The catalytic hydroconversion process utilizes a highly dispersed stable iron-based catalyst that is added uniformly to the hydrocarbon feed material before preheating and feeding together with hydrogen into a first stage, back-mixed catalytic reactor in which the feed material is hydrogenated and hydrocracked. WO 2008/141830 describes a process for the hydroconversion of heavy oils in which the reaction takes place in a bubble-type reactor capable of accumulating at least 50 kg/m³ of solids, fuelled by hydrogen or a mixture of hydrogen and sulphuric acid in which the hydrogen has a weight ratio, with respect to the charge, of at least 0.3. The concentration of molybdenum used as a catalyst is at least 5 kg per each m³ of charge.

WO 2008/141831 describes a system for the hydroconversion of heavy oils which consists of a solids accumulation reactor and a stripping section outside or inside the reactor. When the stripping section is internal, the reactor can be completely or partially filled and the stripping section can be positioned in the upper part of the reactor or downstream of a duct inside the reactor. When the stripping section is external, the reactor - completely filled - provides a forced recirculation circuit of the liquid phase to the reactor itself. It is also possible that there is a liquid-vapour separator downstream of the reactor.

WO 2016/103199 describes a system for the hydroconversion of heavy oils comprising a reactor, a liquid-vapour separator and a stripping section of the conversion products outside the reactor. The stripping gas is introduced directly into the reaction effluent through a stripping gas introduction duct, positioned at a point of the connection duct between the reactor head and the liquid-vapour separator, said connection duct being inclined, at least starting from the introduction point, upwards with a slope between 2% and 20%, with respect to a horizontal plane. The stripping gas introduction duct is inclined with respect to the axis of the connection duct between the reactor head and the liquid-vapour separator at an angle comprised between 20° and 65°. The flow of the stripping gas stream that is introduced into the connection duct between the reactor head and the separator has a direction from top to bottom. After stripping, the effluent is sent to an HP/HT phase separator to separate the liquid phase also containing a small amount of solids (those formed during the reaction and the dispersed catalyst) which is recycled into the reactor and a vapour phase containing the reaction products.

WO 2018/078555 describes a process for the hydroconversion of heavy petroleum products which are reacted in a hydroconversion reactor, together with a recycling containing hydrogenating gas and in the presence of a suitable catalyst producing a two-phase effluent.

The reaction effluent is fed to a high-pressure and high-temperature stripping step, which operates at the reaction pressure, using a stream as a stripping gas having the same composition as the gas fed to the reactor; and thus producing a stream in vapour phase and a stream in slurry phase containing the heavy products and solids. The slurry is in part recirculated into the hydroconversion section, and partly withdrawn, continuously forming a purge stream. Several methods have been developed for the purge treatment in order to recover the components that can be valorised, such as for example the catalyst metals.

WO 2014/025561 describes a process for the recovery of a catalyst for hydro-cracking from an effluent coming from a hydro-cracking *slurry* zone. Said process provides that the effluent is separated into a first stream containing solvent and a clarified *(pitch),* and a second stream containing pitch and catalyst.

The separation can take place by centrifugation, filtration, decantation or electrostatic separation. The second stream is treated by leaching with acid so as to extract the catalyst and form an aqueous solution and a residue. The aqueous solution is then treated with anions to form an insoluble salt, the catalyst, and a further aqueous solution.

US 2013/0247406 describes an integrated process which comprises:
- a process for valorising heavy crude oils to convert them into lighter products in the presence of a catalyst;
- a *deoiling* process in which the heavy residues and the heavier products deriving from the treatment of heavy crude oils are separated by the exhausted catalyst which will subsequently be recovered;
- a synthesis zone of the catalyst.

The separation of the catalyst takes place by treatment with filtration technologies on membranes, and a subsequent stage of thermal devolatilization.

WO 2009/070778 describes a method for recovering the metals of an exhausted catalyst used in a *slurry* process valorising heavy oils. According to WO 2009/070778 the phase containing the exhausted catalyst is subjected to pyrolysis and the pyrolysis residue is put in contact with a leaching solution containing ammonia and with air, to dissolve the metals of the VIB and VIII groups, and form a *slurry* under pressure. Said *slurry* contains at least one soluble metallic complex of the VIB and VIII group, ammonium sulphate and a solid residue containing at least one metal complex of the VB group and coke.

Subsequently the solid residue containing ammonium metavanadate and coke from the pressurised *slurry* is separated and removed. A portion of the metals of the VIII group is precipitated. The precipitation is carried out at a predetermined pH to selectively precipitate a portion of the metal complexes of the VIB and VIII groups.

US 2010/0122938 relates to a process for separating ultra fine hydro-cracking solid catalysts from a liquid *slurry* of hydrocarbons, said solids present in an amount comprised between 5% and 40% by weight. The process envisages the following stages:
- cooling a *slurry* stream containing hydrocarbons and solids, preferably at a temperature ranging from 55°C to 75°C;
- mixing said cooled stream with a solvent in a solvent/slurry weight ratio ranging from 3:1 to 1:3, to form a first mixture containing liquid hydrocarbons, solvent and a stream containing the heavy hydrocarbon which encapsulates the catalyst solid;

- separating the first mixture in a first centrifuge to form a second mixture containing a low concentration of heavy hydrocarbon that encapsulates the catalyst solid, and a third mixture containing heavy hydrocarbon that encapsulates the catalyst solid;
- separating the second mixture in at least one second centrifuge to form a fourth mixture containing solvent and liquid hydrocarbons, and a fifth mixture containing a significant concentration of heavy hydrocarbon which encapsulates the catalyst solid;
- mixing the third mixture and the fifth mixture to form a final mixture;
- drying the final mixture to form a mixture of hydrocarbons with impurities in the vapour phase and a coke-type solid residue;
- separating the impurities from the hydrocarbons and recovering the solid residue.

US 7,790,646 describes a process for converting fine catalysts, present in amounts between 5 and 40% by weight, and contained in a *slurry* stream together with heavy oils in coke-type materials, from which to recover the catalyst metals. The process comprises the following steps:
- mixing a slurry containing heavy oils and an exhausted catalyst containing metal sulphides of the VIII and VI groups with a solvent, preferably in a volumetric ratio comprised between 0.5/1 and 5/1, preferably at a temperature ranging from 25°C to 80°C thus making the asphaltenes precipitate;
- separating, preferably by decantation and/or centrifugation, the exhausted catalyst and the precipitated asphaltenes from the heavy oils and the solvent;
- converting the precipitated asphaltenes into coke-like material containing metals that will be recovered by thermal pyrolysis.

EP 2440635 describes a process for recovering metals from a stream rich in hydrocarbons and carbon residues which comprises the following stages:
- sending said stream to a primary treatment, carried out in one or more stages, in which said stream is treated in the presence of a fluxing agent in a suitable apparatus, at a temperature ranging from 80°C to 180°C and subject to a liquid/solid separation to obtain a clarified consisting of liquids and a cake;
- optionally subjecting said separated cake to drying to remove the hydrocarbon component which has a lower boiling point at a temperature ranging from 300°C to 350°C from a cake;
- sending said cake, optionally dried, to a secondary heat treatment which comprises:
   o a flame-free pyrolysis at a temperature comprised between 400°C and 800°C;
   o an oxidation of the pyrolysis residue carried out under oxidation conditions and at a temperature comprised between 400°C and 800°C.

Patent application US 2010/0326887 describes the separation of a not-sticky *pitch* from a hydrocarbon *slurry,* by means of a distillation treatment which brings the Vacuum Gas Oil (VGO) content in the final product below 14% by weight. The solids are concentrated at the bottom of the column to give pitch.

WO 2017/109728 describes a process for the treatment of refinery purge streams which comprises the following steps:
- taking a purge stream from a refinery containing a hydrocarbon component in slurry phase having a boiling point greater than or equal to 140°C, characterised by the presence of quantities of asphaltenes greater than or equal to 5% by weight and characterised by the presence of solids content greater than or equal to 5% by weight;
- mixing, at a temperature greater than or equal to 100°C, said purge with a mixture of hydrocarbons or flux that has a total aromatic content comprised between 50% and 70% by weight, and a starting boiling point equal to or greater than the temperature at which the mixing is conducted, so as to form a suspension with a content greater than or equal to 10% by weight of compounds having a boiling point T_{bp} less than or equal to 350°C;
- sending said suspension to a liquid-solid separation stage, which operates at a temperature greater than or equal to 100°C, separating a solid phase containing a residual organic component and a solid component, cake, and a liquid phase containing solid residues;
- cooling the solid phase thus obtained under 60°C, and stocking it, keeping it at a temperature lower than or equal to 60°C.

In said process the weight ratio between purge and flux varies between 1:0.5 and 1:4, and the average residence time of the mixture during the mixing and before the liquid-solid separation is lower than or equal to 12 hours. As previously stated, the purge stream constitutes a value comprised between 6% and 8% of the fresh charge, so that the total conversion that can be obtained under normal operating conditions varies from 92% to 94%.

In the literature, the possibility of producing liquid fuels from waste from the processing of plastic materials is documented. The processes used can be catalytic or thermal. Some of these documents are listed:
- Production of Liquid Fuels from Waste Plastics, THE CANADIAN JOURNAL OF CHEMICAL ENGINEERING, VOLUME 77, OCTOBER, 1999;
- Feedstock Recycling and Pyrolysis of Waste Plastics: Converting Waste Plastics into Diesel and Other Fuels Edited by J. Scheirs and W. Kaminsky 2006 John Wiley & Sons, Ltd ISBN: 0-470-02152-7;
- Chemical Recycling of Plastic Waste (PVC and other resins); TNO-report STB-99-55 Final; Tukker, de Groot, Simins, Wiegersma; December 1999 (ASSIGNOR: European Commision, DG II);

The purely thermal degradation of polymeric waste has been studied both in the laboratory and on a pilot scale.

For the class of styrene-type polymers good yields in styrene (greater than or equal to 75%) can be obtained by rapid pyrolysis (depolymerization with molecular approach). In order to effectively deal with this depolymerization process and obtain the starting styrene monomer, it is necessary to feed the process with a polystyrene-only charge, the process is not effective using a mixture of polymers as the charge.

For polyethylenes, polypropylenes and polyvinyl chloride, monomer yields are low and mainly high molecular weight hydrocarbons (oils) and gases with high calorific power are produced. This means that it is not possible to depolymerize polymers such as polyethylenes, polypropylenes and polyvinyl chloride to monomers or to *building blocks* of the plastics production chain.

On the other hand, said classes of polymers treated in mixture generate low-quality fuel oils which need to be upgraded in order to be valorised based on their net calorific value. In this case, therefore, the low efficiency recycling of plastics to energy is discussed.

Furthermore, the formation of coke is caused as a by-product, causing fouling of the relative plants and the impossibility of running continuously. Due to these criticalities, this process is not applied industrially. The catalytic processes for the conversion of plastics are of various nature and normally provide for a thermal pre-treatment of the plastic material in order to obtain a heavy hydrocarbon (Heavy Oil) that can be fed to a catalytic hydroconversion process to produce hydrocarbons, including the naphtha cut.

### DISCLOSURE OF INVENTION

For this purpose the Applicant has found a process for the hydroconversion of polymer mixtures which comprises the following steps:
- pre-treating a polymer mixture through methods selected from mechanical methods, chemical methods, thermal methods, or combinations thereof, making the polymer mixture miscible or suspendable in a vacuum residue and forming a pre-treated charge;
- mixing said pre-treated charge with a vacuum hydrocarbon residue, optionally pre-heated, to form a reactant mixture;
- feeding to the hydroconversion section the reactant mixture in slurry phase, an oleosoluble precursor of a catalyst containing Molybdenum, which is fed to the hydroconversion section of the liquid phase, and a stream containing hydrogen;
   and carrying out a hydroconversion reaction producing a reaction effluent; wherein the catalyst used during the hydroconversion reaction is generated *in situ* by the oleosoluble precursor;
- separating the reaction effluent into at least one high-pressure and high-temperature separator in a vapour phase and a slurry phase;
- then sending the separate vapour phase to a gas treatment section with the function of separating a liquid fraction from the gas containing hydrogen and hydrocarbon gases having from 1 to 4 carbon atoms; said liquid fraction comprising naphtha, atmospheric gas oil (AGO), vacuum gas oil (VGO);
- then sending the slurry phase to a separation section that has the function of separating the fractions of the Oil Vacuum (VGO), Heavy Vacuum Gas Oil (HVGO), Light Vacuum Gas Oil (LVGO), Atmospheric Gas Oil (AGO), from a stream of heavy organic products which contains asphaltenes, unconverted charge, catalyst and solid formed during the hydroconversion reaction;
- recirculating a portion of said heavy organic products to the hydroconversion section, or mixing them with the pre-treated charge before being fed into the hydroconversion, and with the remainder forming a purge stream.

A further embodiment of the present invention is a mixture of polymers in solid phase which comprises:
- one or more polymers, preferably all the polymers, selected from:
   o Ethylene polymers or copolymers, mixtures thereof; preferably selected from high-density polyethylene (HDPE), low-density polyethylene (LDPE), linear low-density polyethylene (LLDPE), very low density polyethylene (VLDPE), ultra low density polyethylene (ULDPE), metallocene catalytic polyethylene (m-PE), ethylene-vinyl acetate (EVA) polymers, and mixtures thereof;
   o Propylene polymers or copolymers, mixtures thereof; preferably selected from polypropylene (PP) or ethylene propylene diene monomer rubbers (EPDM) and mixtures thereof;
   o Styrene polymers or copolymers, mixtures thereof: preferably selected from polystyrene (PS), expandable polystyrene (EPS), high impact polystyrene (HIPS), acrylonitrile-styrene-butadiene polymers (ABS), styrene copolymers acrylonitrile (SAN), styrene-butadiene-styrene block copolymer (SBS), styrene-ethylene-butylene-styrene block copolymers (SEBS), and mixtures thereof;
   o Vinyl chloride polymers or copolymers or vinylidene dichloride copolymers, mixtures thereof, preferably selected from polyvinyl chloride (PVC), polyvinylidene chloride (PVDC) and its copolymers and mixtures thereof;
   o Polyesters, preferably selected from polycarbonate (PC), polyethylene terephthalate (PET), polytrimethylene terephthalate (PTT), polybutylene terephthalate (PBT), poly lactic acid (PLA), poly (L-acid lactic acid) (PLLA), poly (D-lactic acid) (PDLA), poly (D, L-lactic acid) (PDLLA), polyhydroxyalkanoate (PHA) and mixtures thereof;
   o Polyamides, preferably selected from nylon 6 (PA6), nylon 66 (PA66), nylon 46 (PA46), nylon 12 (PA12);
   o Polymers containing urethane bonds, preferably selected from polyurethanes (PU) containing aliphatic, or aromatic, or ester, or ether, or urea groups, and mixtures thereof;
   o Cellulose-derived polymers, preferably selected from cellulose nitrate, cellulose acetate, cellulose acetate-butyrate, cellulose propionate, ethyl cellulose, carboxymethylcellulose, hydroxyethyl cellulose, benzyl cellulose and regenerated cellulose, and mixtures thereof;
   o Mixtures thereof
- Possibly additives of organic or inorganic origin, having for example the function of antioxidants, thermal stabilisers, antacids, nucleating agents, UV stabilisers, antiblocking, slip agents, antislip agents, plasticisers, external lubricants, releasing agents, flame retardants, polymer processing aids, dyes (organic and inorganic), antistatic agents, cross-linking agents, cross-linking aids, extender oils, vulcanisation accelerators, anti-ozonants and mixtures thereof.

Advantageously with the described and claimed process it is possible to demonstrate the flexibility of the charges in the hydroconversion process and the feasibility of the chemical recycling of the polymers, the naphtha being at the base of the petrochemical chain. In this way it is possible to valorise a waste product from the recycling of plastics or polymers.

The described and claimed process allows increasing the naphtha fraction thanks to the conversion of the polymer charge.

Furthermore, it concentrates the inorganic components present in the initial polymer mixture in the solid residues, without contaminating the hydrocarbon products. The products obtained with the hydroconversion process of the polymeric mixtures, lead to the production of monomers to be included in the synthesis chain of plastic materials usable in every application.

One of the major disadvantages of the production of products from the mechanical recycling of plastic materials is represented by the fact that it is not always possible to allocate the product obtained from mechanical recycling to the same application from which the waste was derived. In fact, applications exist that are very sensitive to the contamination present in the waste collection flows (for example "food" applications, i.e. in contact with food). With the described process, instead, naphtha is produced which can be used in the supply chain for the synthesis of polymers, which can also be used in "food" applications (from which the largest share of post-consumer waste comes).

The hydroconversion technology or EST incorporates therein the characteristic advantages of chemical recycling processes via hydroconversion, all while avoiding one of the main criticalities which is the deactivation of the catalyst due to impurities introduced through the polymer charge.

In detail, through the hydroconversion of plastic materials via hydroconversion or via EST technology there is:
- A high yield of naphtha;
- a narrow distribution of outgoing products;
- a high product quality (high H/C ratio, low aromatic content);
- the possibility of using a heterogeneous mixture of polymeric materials as a charge.

### BRIEF DESCRIPTION OF THE DRAWINGS

Further aims and advantages of the present invention will appear more clearly from the following description and from the accompanying figures, given purely by way of non-limiting example, which represent preferred embodiments of the present invention.

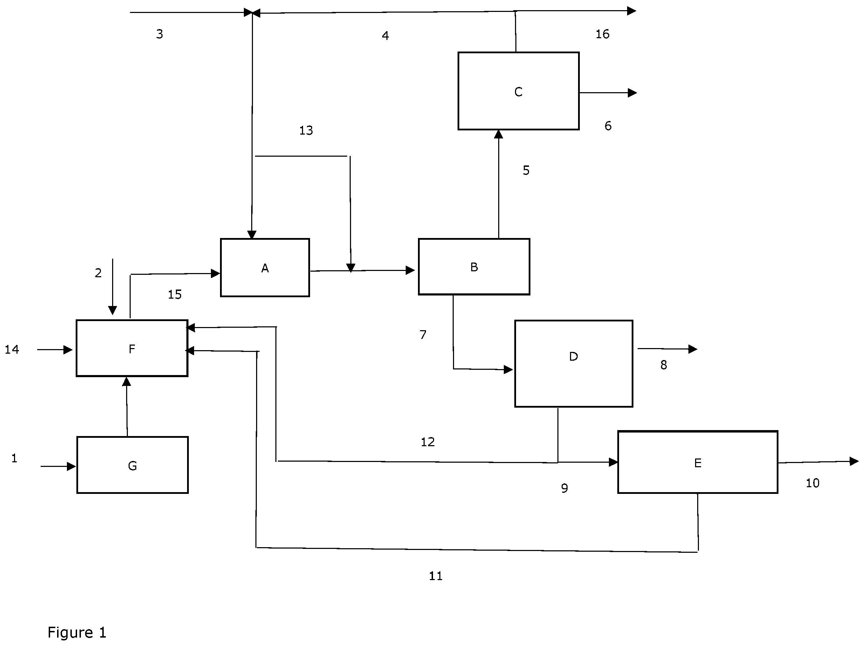

Figure 1 shows a preferred embodiment of the process according to the present invention, in which the mixture of polymers (1) is fed to a pre-treatment section (G); then the pre-treated mixture is mixed in (F) with a vacuum residue (14) and catalyst precursors (2), together with the heavy product (12) and the clarified product (11) thus forming a reactant mixture (15).

The reactant mixture (15) is then fed into a hydro-conversion reactor (A) together with a stream containing hydrogen. The reaction effluent is fed to a high-pressure and high-temperature separator (B) which forms a gaseous stream (5) and a slurry (7). The gas (5) is fed into the treatment section (C) where a gaseous stream containing hydrogen (4) is separated from naphtha, atmospheric gas oil (AGO) and Vacuum Gas oil (VGO) (liquid fraction) indicated with 6. Part of the gaseous stream containing hydrogen is purged (16), while the remaining part (4) is mixed with the hydrogen make-up (3) and the resulting stream is fed to the hydro-conversion reactor (A), at least one saturation gas (13) cut from gaseous recycling, which is fed to the bottom of the high-pressure and high-temperature separator (B).

The slurry (7) is fed into a separation section (D) to separate Vacuum Gas Oil (VGO) from a heavy product which partly recirculates to the mixing section (12, F) and partly forms a purge stream (9). The purge is subjected to a liquid-solid separation (E) where a heavy or dense phase (10) is separated from a light or clarified phase (11) which is recirculated to the mixing section (F).

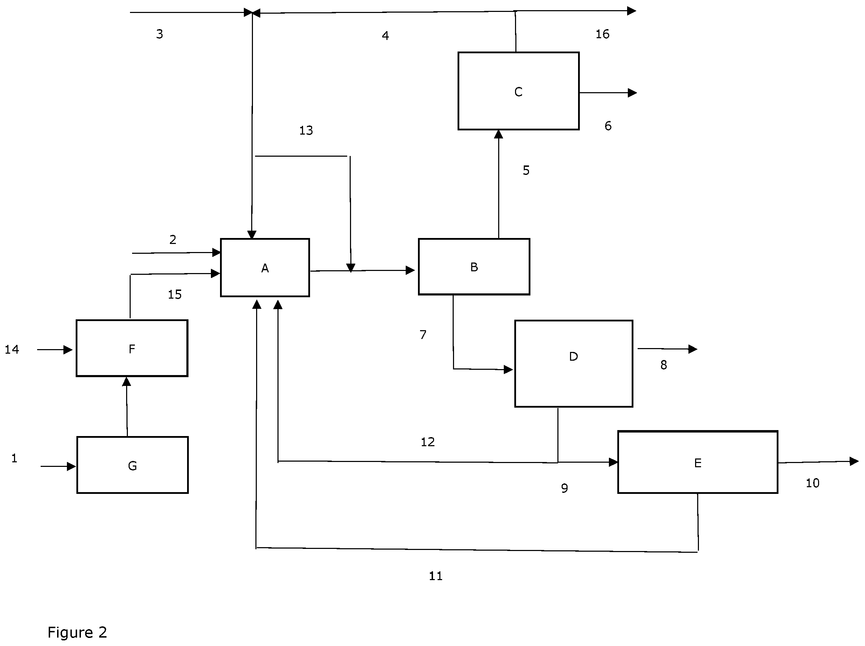

Figure 2 illustrates a preferred embodiment of the process according to the present invention, in which the catalyst precursors (2) are fed into the hydro-conversion section (A); a part of the heavy product recirculates to the hydro-conversion reactor (A), the clarified product (11) is recirculated to the hydro-conversion reactor (A). The rest of the process is similar to that described in Figure 1.

### BEST MODE FOR CARRYING OUT THE INVENTION

The method for the hydroconversion of polymer mixtures which is the object of the present patent application is now described in detail, also with reference to Figure 1 and Figure 2.

A mixture of polymers (1) is suitably pre-treated, then it is mixed with a vacuum residue (14). The catalyst precursors (2) can be fed to the mixer (F) or to the hydroconversion reactor (A). The mixture (15) is then subjected to a hydroconversion reaction producing hydrocarbons having a lower boiling temperature than the starting charge. In particular, a conversion of the mixture of polymers to hydrocarbon products is observed with boiling temperatures preferentially in the range from 65°C to 170°C, also known as naphtha cut.

In the present patent application vacuum residue is meant as the residual stream of industrial origin which remains following a vacuum distillation of the pool of crude oils entering a refinery.

For the purposes of the present invention, the mixture of polymers mixed with the vacuum residue comprises polymeric waste deriving, for example, from the sorting cycle of differentiated solid urban plastic waste, from the selection from unsorted solid urban waste, from waste from industrial, craft, commercial and agricultural activities. The treated polymer mixtures are in solid phase and comprise:
- one or more polymers, preferably all the polymers, selected from the following classes:
   ∘ Ethylene polymers or copolymers, mixtures thereof; preferably selected from high-density polyethylene (HDPE), low-density polyethylene (LDPE), linear low-density polyethylene (LLDPE), very low density polyethylene (VLDPE), ultra low density polyethylene (ULDPE), metallocene catalytic polyethylene (m-PE), ethylene-vinyl acetate (EVA) polymers, and mixtures thereof;
   o Propylene polymers or copolymers, mixtures thereof; preferably selected from polypropylene (PP) or ethylene propylene diene monomer rubbers (EPDM) and mixtures thereof;
   o Styrene polymers or copolymers, mixtures thereof: preferably selected from polystyrene (PS), expandable polystyrene (EPS), high impact polystyrene (HIPS), acrylonitrile-styrene-butadiene polymers (ABS), styrene copolymers acrylonitrile (SAN), styrene-butadiene-styrene block copolymer (SBS), styrene-ethylene-butylene-styrene block copolymers (SEBS), and mixtures thereof;
   o Vinyl chloride polymers or copolymers or vinylidene dichloride copolymers, mixtures thereof, preferably selected from polyvinyl chloride (PVC), polyvinylidene chloride (PVDC) and its copolymers and mixtures thereof;
   o Polyesters, preferably selected from polycarbonate (PC), polyethylene terephthalate (PET), polytrimethylene terephthalate (PTT), polybutylene terephthalate (PBT), poly lactic acid (PLA), poly (L-acid lactic acid) (PLLA), poly (D-lactic acid) (PDLA), poly (D, L-lactic acid) (PDLLA), polyhydroxyalkanoate (PHA) and mixtures thereof;
   o Polyamides, preferably selected from nylon 6 (PA6), nylon 66 (PA66), nylon 46 (PA46), nylon 12 (PA12);
   o Polymers containing urethane bonds, preferably selected from polyurethanes (PU) containing aliphatic, or aromatic, or ester, or ether, or urea groups, and mixtures thereof;
   o Cellulose-derived polymers, preferably selected from cellulose nitrate, cellulose acetate, cellulose acetate-butyrate, cellulose propionate, ethyl cellulose, carboxymethylcellulose, hydroxyethyl cellulose, benzyl cellulose and regenerated cellulose, and mixtures thereof;
   o Mixtures thereof;
- Possibly additives of organic or inorganic origin, having for example the function of antioxidants, thermal stabilisers, antacids, nucleating agents, UV stabilisers, antiblocking, slip agents, antislip agents, plasticisers, external lubricants, releasing agents, flame retardants, polymer processing aids, dyes (organic and inorganic), antistatic agents, cross-linking agents, cross-linking aids, extender oils, vulcanisation accelerators, anti-ozonants and mixtures thereof.

The inorganic component of the polymeric mixture (consisting of ashes) and the unconverted polymers are instead concentrated in the fraction called THF-i (insoluble tetrahydrofuran).

A preferred mixture contains 35-60% by weight of polyethylene (PE) 15-40% by weight of polypropylene (PP); 0-25% weight of polystyrene (PS), 0-15% weight of polyethylene terephthalate (PET), 0-5% weight of polyvinyl chloride (PVC), 0-15% weight of inorganic charges.

The polymer mixtures are mixed with the vacuum residue preferably at 5% by weight, more preferably at 20% by weight.

The process which is the object of the present patent application comprises several steps, among these a pre-treatment step of the polymer mixture (G) which has the purpose of making the polymer mixture miscible or suspendable in the vacuum residue (Vacuum Oil); and a hydro conversion step (A) of the reactant mixture to produce hydrocarbon products, among which preferably naphtha cuts. Naphtha is at the base of the petrochemical chain and thus allows valorising a waste product from the recycling of plastics or polymers.

A polymer mixture (1) can be pre-treated through methods selected from mechanical methods, chemical methods, thermal methods, or combinations thereof, in a pre-treatment section (G) forming a pre-treated charge. Among the preferred mechanical pre-treatments is grinding, also cryogenic, of the polymer mixture, in order to reduce the average dimension of the charge D₅₀ itself to less than or equal to 1mm.

The particle size distribution of the ground polymeric mixture was evaluated using Light Scattering measurements, performed with Mastersizer 2000 (Malvern Instruments). The dimension (MT50 or D₅₀) is measured with a laser granulometer and is the diameter corresponding to 50% by weight of particles having a smaller diameter, and 50% by weight of particles having a larger diameter.

Among the preferred chemical pre-treatments are those selected from:
- preparing the polymers mixture in an acid or basic atmosphere at room temperature, preferably selected from an aqueous solution of H₂SO₄ at 10% w/w, an aqueous solution of NaOH at 10% w/w, an aqueous solution of Ca(OH)₂ at 10% w/w;

- preparing the polymers mixture with hydrocarbon compounds, at low or high molecular weight at room temperature; preferably selected from "styrene residues" and/or "phenolic residues".

Among the preferred thermal pre-treatments is the method which involves heating the polymer mixture to a temperature T greater than or equal to 200°C in an inert environment, possibly also through equipment such as extruders, thus allowing the intimate mixing of the polymeric components and the best subsequent mixing with Vacuum Oil.

The pre-treatments can preferably be combined together in order to obtain the best stability of the final solution or suspension.

The pre-treatments can also be combined with each other, the preferred combinations being the following:
- the polymer mixture is ground, also with cryogenic grinding, in order to reduce the average dimension of the charge D₅₀ itself to less than or equal to 1mm; then the ground polymer mixture is added to acids or bases at room temperature, preferably selected from an aqueous solution of H₂SO₄ at 10% w/w, an aqueous solution of NaOH at 10% w/w, an aqueous solution of Ca(OH)₂ at 10% w/w, styrene residues and/or phenol residues; or
- the polymer mixture is ground, also with cryogenic grinding, in order to reduce the average dimension of the charge D₅₀ itself to less than or equal to 1mm; then the ground polymeric mixture is reheated to a temperature T greater than or equal to 200°C in an inert environment; or
- the polymer mixture is heated to a temperature above or equal to 200 °C in an inert atmosphere, then the heated polymer mixture is added to acids or bases at room temperature, preferably selected from an aqueous solution of H₂SO₄ at 10% w/w, an aqueous solution of NaOH at 10% w/w, an aqueous solution of Ca(OH)₂ at 10% w/w, styrene residues and/or phenol residues.

Once the charge is pre-treated it can be mixed in a mixing section (F) with a vacuum hydrocarbon residue, optionally pre-heated, forming a reactant mixture which can be subsequently fed into a hydroconversion section in slurry phase (A). In this phase a catalyst precursor containing Molybdenum can also be added; otherwise said precursor can be added to the reactor.

The mixture thus formed, and possibly the precursors, are fed together with a stream containing hydrogen to the hydroconversion reactor (A) to conduct a hydroconversion reaction producing a reaction effluent.

Preferably the hydroconversion reactor in slurry phase is a bubble column. One or more hydroconversion reactors placed in parallel can be used; similarly, one or more high-pressure and high-temperature separators can be used in parallel.

Preferably a part of the hydrogen-containing recycling gas (13) is fed to the high-pressure and high-temperature separator.

The reaction effluent can be separated into at least one high-pressure and high-temperature separator (B) in a vapour phase and a slurry phase. The separated vapour phase can be subsequently sent to a vapour treatment section (C) with the function of separating a liquid fraction from the hydrogen-containing gas.

The vapour treatment section operates at gradually decreasing pressure and temperature.

Said section can comprise heat exchangers interspersed with a washing column which uses VGO as a solvent, a high-pressure and medium-temperature separator, a high-pressure and low-temperature separator.

From the vapour treatment section, naphtha, atmospheric gas oil (AGO), vacuum gas oil (VGO) and a gaseous stream rich in hydrogen are recovered, which contains hydrocarbon gases having from 1 to 4 carbon atoms, and which is recycled to the hydroconversion section (4), except for a gaseous sample that can be fed into the high-pressure and high-temperature separator (B).

The slurry phase can be subsequently sent to a separation section (D) that has the function of separating the fractions of the Vacuum Gas Oil (VGO), Heavy Vacuum Gas Oil (HVGO), Light Vacuum Gas Oil (LVGO), Atmospheric Gas Oil (AGO), from a stream of heavy organic products which contains asphaltenes, unconverted charge, catalyst and solid formed during the hydroconversion reaction.

Said liquid separation section (D) can preferably comprise a series of devices of decreasing pressure and temperature. In a first step the slurry is fed to a high-temperature and low-pressure separator which acts as an accumulator; in a second step the separated vapour phase is fed into a pre-flash column, eventually the bottom current is fed to a stripper to separate the light oils, and finally in a third step the enriched stream leaving the stripper is fed to a vacuum distillation column; alternatively, the stripper is not present and the bottom stream is fed to a vacuum distillation column. The Vacuum Gas Oil (VGO) fraction, the Light Vacuum Gas Oil (LVGO) fraction, the Heavy Vacuum Gas Oil (HVGO) fraction, the Wash Oil and the vacuum residue are recovered from the vacuum column. The Vacuum residue leaves the bottom of the vacuum column and is rich in asphaltenes, solids, metals and catalysts and forms a stream of heavy products.

A part of the heavy products (12, Figure 1) is recycled to the mixing section (F) or to the hydroconversion section in slurry phase (12, Figure 2), while the remaining part forms a purge stream (9).

The described and claimed process can comprise a further purge processing step which provides a liquid-solid separation treatment selected from sedimentation, filtration or centrifugation.

In a first separation process the purging can be heated to a temperature greater than or equal to 185°C and no greater than 220°C, preferably between 200°C and 220°C. Subsequently the hot purge can be cooled by progressively and in a controlled manner lowering the temperature to a minimum temperature of 100°C, preferably comprised between 100°C and 170°C, more preferably comprised between 100°C and 160°C, without stirring the purge, so as to form a light phase (clarified) and a heavy phase (cake) as a function of the density.

The controlled lowering of the temperature can occur in different ways:
by using an adequately sized and thermostated tank, for example a hot-oil thermostated tank, or
by mixing the warm stream to be decanted, for example the heated purge, with a cold stream, for example the clarified which can be at a temperature ranging from 200°C to 80°C, considering the appropriate thermal balance of the system to calculate the flow rates thereof.

The controlled lowering of the temperature is of a value ranging from 3°C per minute to 10°C per minute, preferably from 5°C per minute to 10°C per minute, more preferably 10°C per minute.

The cooled purge can be subjected to sedimentation, for example in a static sedimentation tank (E); during the static sedimentation, the temperature must be such as to make the asphaltenes insoluble and at the same time make the clarified part movable, allowing its extraction.

In the temperature range comprised between 100°C and 160°C the separation of the dense phase (cake) is optimal.

During the sedimentation phase the purge is not shaken. The sedimentation forms a light phase, called clarified, and a heavy phase, called cake, as a function of the density.

The time required for the formation of a heavy phase or cake can range from preferably 15 minutes to 2 hours, more preferably it ranges between 20 minutes and 1 hour. The sedimentation rate is preferably comprised between 85 mm/hour and 300 mm/hour.

The cake produced is "glassy" at room temperature with a softening point that can range from 80°C to 100°C and penetration 2 dmm.

The consistency of the cake is due to the presence of solids (THFi) in greater concentration than the other streams and to the presence of asphaltenic compounds.

The clarified (11) thus obtained can preferably be recirculated into the mixing section (F) or into the hydroconversion section (A).

In an alternative separation process the purge is mixed, at a temperature greater than or equal to 100°C, with a mixture of hydrocarbons or flux which has a total aromatic compound content ranging from 50% to 70% by weight, and a starting boiling point equal to or greater than the temperature at which the mixing is conducted, so as to form a suspension with a content greater than or equal to 10% by weight of compounds having a boiling point T_{bp} less than or equal to 350°C.

Said suspension is then subjected to a liquid-solid separation stage, which operates at a temperature greater than or equal to 100°C, separating a solid phase containing a residual organic component and a solid component, cake, and a liquid phase containing solid residues.

The liquid-solid separation is preferably carried out by filtration or by using a centrifugal decanting device (centrifugation) which operates at temperature. The separation is followed by cooling the solid phase (cake) thus obtained under 60°C, including the upper end, and maintaining it at a temperature lower than or equal to 60°C.

The catalyst used during the hydroconversion reaction is generated "in situ" by an oleosoluble precursor containing Mo, which is fed to the hydroconversion reactor in liquid phase directly with the charge, or to the mixer together with the vacuum residue. The normally used precursor consists of Mo 2-ethylhexanoic acid (2-ethylhexanoate) solution, containing 15.5% by weight of Mo.

The catalyst precursor is liquid and reacts with the sulfide coming from the charge and the hydrogen present in the reactor forming MoS₂ (solid molybdenite finely dispersed in the liquid phase) in lamellas.

The hydroconversion reactors can operate in a temperature range comprised between 420°C and 440°C, at a pressure comprised between 155 atm and 160 atm.

The high-pressure and high-temperature separators operate in the same operating conditions as the hydroconversion reactors, except for the head losses and the heat losses along the line that connects the reactors to the separators.

Some application examples of the present invention are now described, which have a purely descriptive and non-limiting purpose and which represent preferred embodiments.

### EXAMPLES

### Description of polymeric charge

The polymeric charge used in the following examples, indicated with the term PLASMIX, is a mixture coming from the sorting of the separate collection of plastic packaging. These materials originate from industrial residues and/or post-consumer materials.

In particular, the unselected fraction output from the sorting process was tested, consisting of a mixture of heterogeneous plastics, mostly polyolefins.

The mixture consists of flakes with dimensions D₅₀>1cm and characterised by an apparent density of 200 kg/m³ measured according to the method ASTM D1895-96.

The described charge is insoluble in tetrahydrofuran.

In all the examples the mixture of polymers or plastics (polymeric charge) contains 35-60% weight of polyethylene (PE), 15-40% weight of polypropylene (PP); 0-25% weight of polystyrene (PS), 0-15% weight of polyethylene terephthalate (PET), 0-5% weight of polyvinyl chloride (PVC), 0-15% weight of inorganic charges.

The mixtures of polymers or plastics are mixed with the vacuum residue preferably at 5% by weight with respect to the vacuum residue.

### Example 1: mechanical pre-treatment by grinding

For grinding, a Retsch Mill with a rotor diameter of 130 mm was used equipped with a 1.5 kW motor with the following operating conditions:
- RPM = 1500
- grinding times = 10 minutes per 100 grams of product
- 2.5 mm "pass-through" mesh; the pass-through mesh can have "holes" of different sizes depending on the final granulometry to be obtained. Fine meshes impose longer times with the risk of the material overheating and the "kneading" of the entire mesh. 2.5 mm is the compromise we identified for this type of initial fluff.
- The grinding of the polymeric charge produced a particle size distribution characterised by D₅₀<1mm.

### Example 2: mechanical pre-treatment by cryogenic grinding

For grinding, a Retsch Mill ZM200 was used, an ultra-centrifugal rotor with annular screens, with current absorption of 1300 W and rotation speed between 6000 and 18000 rpm. Operating conditions:
- Material dosing through the Retsch DR100 sampler with slide speed 5
- RPM = 10000
- grinding time = 60 minutes per 15-20 grams of product
- 0.12 mm annular screen
- Addition of dry ice to the rotor for cooling
- Aspirated cyclone collection tank
- The grinding of the polymeric charge produced a particle size distribution characterised by D₅₀<0.2mm.

### Example 3: Chemical pre-treatment

100 ml of aqueous solution of NaOH at 10% w/w is prepared at room temperature in a glass flask. The polymeric charge at 5% w/w is added to this solution. This means that out of 100 grams of reactant mixture, 5 grams are the polymer mixture and 95 grams are the Vacuum residue. The system is initially stirred with a stirbar and subsequently the suspension thus obtained is left to rest for 12 hours.

### Example 4: Chemical pre-treatment

100 ml of aqueous solution of Ca(OH)₂ at 10% w/w is prepared at room temperature in a glass flask. The polymeric charge at 5% w/w is added to this solution. The system is initially stirred with a stirbar and subsequently the suspension thus obtained is left to rest for 12 hours.

### Example 5: Chemical pre-treatment

100 ml of aqueous solution of H₂SO₄ at 10% w/w is prepared at room temperature in a glass flask. The polymeric charge at 5% w/w is added to this solution. The system is initially stirred with a stirbar and subsequently the suspension thus obtained is left to rest for 12 hours.

The pre-treatments reported in examples 2-3-4 were also repeated by adding 10% w/w and 20% w/w of polymeric charge to the different aqueous solutions.

### Example 6: Chemical pre-treatment

100 ml of aqueous solution of NaOH at 10% w/w is prepared at room temperature in a glass flask. The polymeric charge at 5% w/w is added to this solution. The system is initially stirred with a stirbar and subsequently the suspension thus obtained is left to rest for 12 hours. The suspension is filtered to remove the aqueous phase; the solid phase retained on the filter is dried in an oven at 120°C for one night.

The pre-treatment reported in example 5 was also repeated using a solution of Ca(OH)₂ and H₂SO₄.

### Example 7: Chemical pre-treatment

45 grams of "styrene residue" are heated to 120°C, maintaining the stirring for 2h, after which 15 grams of polymeric charge are added. The mixture is kept at 120°C for 16 h in nitrogen storage.

### Example 8: Chemical pre-treatment

1lt. of "styrene residue" is distilled obtaining a fraction containing the compounds with boiling temperatures greater than 350°C. This heavy fraction is then heated to 200°C, mechanically stirred and 5% of polymeric charge is added. The mixture is then cooled and placed in an ultrasonic bath at 50°C for 2 h.

### Example 9: Chemical pre-treatment

1lt. of "styrene residue" is distilled obtaining a fraction containing the compounds with boiling temperatures lower than 350°C. This heavy fraction is then heated to 120°C, mechanically stirred and 5% of polymeric charge is added. The mixture is then cooled and placed in an ultrasonic bath at 50°C for 2 h.

### Example 10: Thermal pre-treatment:

20g of polymeric charge is placed in a nitrogen vented oven at 200°C for 16h.

### Example 11: Thermal pre-treatment:

20g of polymeric charge is placed in a nitrogen vented oven at 250°C for 16h.

### Example 12: Thermal pre-treatment:

20g of polymeric charge is placed in a nitrogen vented oven at 350°C for 16h.

### Example 13: Thermal pre-treatment:

2 kg of polymeric mixture is loaded into a co-rotating twin-screw extruder, equipped with a die plate having cylindrical holes. It is all extruded by operating at a constant temperature profile equal to 300°C, at a pressure upstream of the die plate equal to 50 bar, at a total flow rate equal to 10 Kg/h and at a screw rotation speed equal to 200 rpm. The material is extruded in the form of "spaghetti", cooled in a water bath, air-dried and granulated using a cutter.

### Example 14: Thermal pre-treatment:

2 kg of polymeric mixture is loaded into a co-rotating twin-screw extruder, equipped with a die plate. It is all extruded by operating at a constant temperature profile equal to 300°C, at a pressure upstream of the die plate equal to 15 bar, at a total flow rate equal to 10 Kg/h and at a screw rotation speed equal to 200 rpm. The material melted by the extruder is added to the vacuum residue.

### Example 15: Combined pre-treatments

5 grams of the pyrolysed material is taken at 200°C (example 10) and mixed with 95 grams of acetone.

### Example 16: Combined pre-treatments

5 grams of the pyrolysed material is taken at 250°C (example 11) and mixed with 95 grams of acetone.

### Example 17: Combined pre-treatments

5 grams of the thermally-treated material is taken by extrusion (example 13) and pre-treated through the grinding process (example 1).

### Example 18: claimed process

### MIX PREPARATION

**Case 1:** The polymeric charge is treated as in Example 1, i.e. ground. 5 grams of pre-treated polymeric charge are taken, available at room temperature, and 95 grams of vacuum residue pre-heated to 200°C are added. The mixture is kept warm at 200°C for 2h under mechanical stirring. **Case 2:** The polymeric charge is treated as in Example 1, i.e. ground. 20 grams of pre-treated polymeric charge are taken, and 80 grams of vacuum residue pre-heated to 200°C are added. The mixture is kept warm at 200°C for 2h under mechanical stirring.

**Case 3:** The polymeric charge is treated as in Example 1, i.e. ground. Subsequently, 5 grams of ground polymeric charge are taken and treated as in example 3, i.e. chemically pre-treated with a 10% w/w NaOH solution. The polymeric charge thus pre-treated is added to 95 grams of vacuum residue pre-heated to 200°C. The mixture is heated to 200°C for 2h under mechanical stirring.

**Case 4:** The polymeric charge is treated as in Example 2, i.e. ground. 5 grams of pre-treated polymeric charge are taken, available at room temperature, and 95 grams of vacuum residue pre-heated to 200°C are added. The mixture is kept warm at 200°C for 2h under mechanical stirring.

### REACTION

Several experiments were conducted using a 30cc microautoclave reactor.

The tests were conducted under the following operating conditions:
- 430°C;
- 160 bar of hydrogen;
- 4h;
- 3000 ppm of Molybdenum.

The mixtures tested in the various cases were characterised quantifying by precipitation the amount of insolubles in tetrahydrofuran (THF-i), the insolubles in n-pentane (Ins-C₅, fraction normally considered as an asphaltenic fraction) and the characterisation of the fraction thus de-asphalted using the ASTM D2887 method. The reaction products are collected at the end of the test, quantified and characterised.

The gas phase is characterised by the ASTM D7833 Standard Refinery Gas Analysis method. Of the liquid phase, the insoluble in THF (THF-i) and the insoluble in n-pentane (Ins-C₅) are quantified by precipitation and the de-asphalted fraction is analysed with the method D2887. The tables show the yields calculated according to the following formula: ${Yield}_{Product , %} = \frac{{m}_{product \left(OUT\right)}}{{m}_{mixture \left(IN\right)}} %$
m_{product(OUT)} : mass of outgoing product (g)
m_{mixture(IN)} : mass of mixture loaded (g).

The outgoing products considered are gaseous products containing 1 to 4 carbon atoms (C1-C4), gaseous products containing 5 carbon atoms and liquid products with a boiling temperature comprised between 65°C and 170°C (65°C (C₅)-170°C) considering the naphtha cut; liquid products with boiling temperature between 170°C and 350°C (170°C-350°C); liquid products with boiling temperature between 350°C and 500°C (350°C-500°C); liquid products with a boiling temperature above 500°C (500+°C), products insoluble in n-pentane (Ins-C₅) and products insoluble in tetrahydrofuran (THF-i).

**Table 1**

| | | **EST Base Case** | **Case 1** | **Case 2** |
|---|---|---|---|---|
| **Characterisation Mixture IN** | | | | |
| **IBP-350°C** | wt% | 1.8 | 2.8 | 1.4 |
| **350°C-500°C** | wt% | 11.2 | 7.0 | 9.0 |
| **500°C+** | wt% | 68.4 | 67.6 | 54.7 |
| **Ins-C₅** | wt% | 18.5 | 17.5 | 14.8 |
| **THFi** | wt% | 0.0 | 5.1 | 20.0 |
| | | | | |

| **Yield Products OUT** | | | | |
|---|---|---|---|---|
| **C₁ - C₄** | wt/wt_{FEED} | 7.8% | 8.3% | 10.7% |
| **65°C(Cs)-170°C** | wt/wt_{FEED} | 13.7% | 17.0% | 22.6% |
| **170°C-350°C** | wt/wt_{FEED} | 28.2% | 29.3% | 26.9% |
| **350°C-500°C** | wt/wt_{FEED} | 22.3% | 21.4% | 16.5% |
| **500°C+** | wt/wt_{FEED} | 16.7% | 13.0% | 6.9% |
| **Ins-C₅** | wt/wt_{FEED} | 8.4% | 7.8% | 11.0% |
| **THF-i** | wt/wt_{FEED} | 2.9% | 3.3% | 5.4% |
| | | | | |
| Estimated conversion of PLASM IX | | | 90% | 85% |

The EST base case represents the reactivity of the vacuum residue alone in hydroconversion conditions. The polymeric charge is insoluble in tetrahydrofuran and constitutes the THF-i fraction present in the charge.

In case 1 a vacuum residue charge was treated, added to 5% of mechanically pre-treated polymeric charge (see the Case 1 description of the mixture preparation) while in case 2 the quantity of polymeric charge introduced was increased from 5% to 20%. An increase in the yields of the fraction 65°C-170°C is observed, along with the increase in the charge treated.

THF-i also increase from the base case to case 1 to case 2. This fraction consists of THF-i reaction products (see base case), THF-i deriving from the organic fraction of unconverted plastic material, accumulation, in THF-i, of the inorganic fraction (ashes of the polymeric charge).

**Table 2**

| | | **Case 1** | **Case 3** |
|---|---|---|---|
| **Characterisation Mixture IN** | | | |
| **IBP-350°C** | wt% | 2.8 | 1.1 |
| **350°C-500°C** | wt% | 7.0 | 5.8 |
| **500°C+** | wt% | 67.6 | 65.1 |
| **Ins-C₅** | wt% | 17.5 | 22.7 |
| **THFi** | wt% | 5.1 | 5.4 |
| | | | |

| **Yield Products OUT** | | | |
|---|---|---|---|
| **C₁ - C₄** | wt/wt_{FEED} | 8.3% | 12.3% |
| **65°C(C₅)-170°C** | wt/wt_{FEED} | 17.0% | 16.0% |
| **170°C-350°C** | wt/wt_{FEED} | 29.3% | 25.8% |
| **350°C-500°C** | wt/wt_{FEED} | 21.4% | 14.2% |
| **500°C+** | wt/wt_{FEED} | 13.0% | 6.9% |
| **Ins-C₅** | wt/wt_{FEED} | 7.8% | 12.5% |
| **THFi** | wt/wt_{FEED} | 3.3% | 12.3% |
| | | | |
| Estimated conversion of PLASMIX | | 90% | |

In case 3 the reactivity is reported under the same operating conditions using a vacuum residue mixture with 5% w/w of Plasmix chemically pre-treated with NaOH. As can be seen, while maintaining the naphtha cut yield at 65°C-170°C, the production of THF-i considerably increases, indicating how the presence of NaOH intervenes in the overly high production of solid carbonaceous compounds.

**Table 3**

| | | **Case 1** | **Case 4** |
|---|---|---|---|
| **Characterisation Mixture IN** | | | |
| **IBP-350°C** | wt% | 2.8 | 2.4 |
| **350°C-500°C** | wt% | 7.0 | 7.1 |
| **500°C+** | wt% | 67.6 | 67.9 |
| **Ins-C₅** | wt% | 17.5 | 17.5 |
| **THFi** | wt% | 5.1 | 5.1 |
| | | | |

| **Yield Products OUT** | | | |
|---|---|---|---|
| **C₁ - C₄** | wt/wt_{FEED} | 8.3% | 9.8% |
| **65°C(C₅)-170°C** | wt/wt_{FEED} | 17.0% | 18.3% |
| **170°C-350°C** | wt/wt_{FEED} | 29.3% | 29.5% |
| **350°C-500°C** | wt/wt_{FEED} | 21.4% | 18.6% |
| **500°C+** | wt/wt_{FEED} | 13.0% | 8.2% |
| **Ins-C₅** | wt/wt_{FEED} | 7.8% | 11.6% |
| **THFi** | wt/wt_{FEED} | 3.3% | 3.9% |
| | | | |

In case 4 the reactivity is reported, under the same operating conditions, using a mixture of vacuum residue with 5% w/w of Plasmix pre-treated by grinding, obtaining a Plasmix with D50< 0.2mm. As can be seen, the naphtha cut yield 65-170°C, compared to Case 1 in which the Plasmix was more coarsely ground, slightly increases, as does the production of solids. The decrease in the diameter of the polymeric charge particles helps, in both the mixing and homogenisation of the polymeric charge with the vacuum residue in the preparation phase of the mixture, and, moreover, make the material more available for both the naphtha cut and carbonaceous solids reaction.

### Example 19: comparison

### MIX PREPARATION

**Case 5:** The polymeric charge is treated as in Example 1, i.e. ground. 5 grams of pre-treated polymeric charge are taken, available at room temperature, and 95 grams of vacuum residue pre-heated to 200°C are added. The mixture is kept warm at 200°C for 2h under mechanical stirring.

### Case 6:

The polymeric charge is treated as in Example 2, i.e. ground. 5 grams of pre-treated polymeric charge are taken, available at room temperature, and 95 grams of vacuum residue pre-heated to 200°C are added. The mixture is kept warm at 200°C for 2h under mechanical stirring.

### REACTION

Several experiments were conducted using a 30cc microautoclave reactor.

The tests were conducted under the following operating conditions:
- 400°C;
- 1h;
- 20 bar of nitrogen.

As described in example 18, the mixtures tested in the various cases and the reaction products were characterised quantifying by precipitation the amount of insolubles in tetrahydrofuran (THFi), the insolubles in n-pentane (Ins-C₅, fraction normally considered as an asphaltenic fraction) and the characterisation of the fraction thus de-asphalted using the ASTM D2887 method. The gas phase produced is characterised by the ASTM D7833 Standard Refinery Gas Analysis method.

In the base case reported in the table below and in cases 5 and 6 the operating reaction conditions have been kept unchanged and represent the conditions of a thermal treatment process.

**Table 4**

| | | **THERMAL Base Case** | **Case 5** | **Case 6** |
|---|---|---|---|---|
| **Characterisation Mixture IN** | | | | |
| **IBP-350°C** | wt% | 1.8 | 2.7 | 2.4 |
| **350°C-500°C** | wt% | 11.2 | 7.0 | 7.1 |
| **500°C+ - Ins-C₅** | wt% | 86.9 | 85.3 | 85.4 |
| **THFi** | wt% | 0.0 | 5.0 | 5.1 |
| | | | | |

| **Yield Products OUT** | | | | |
|---|---|---|---|---|
| **C₁ - C₄** | wt/wt_{FEED} | 4.5% | 6.2% | 3.6% |
| **65°C(C₅)-170°C** | wt/wt_{FEED} | 3.0% | 2.4% | 0.9% |
| **170°C-350°C** | wt/wt_{FEED} | 9.9% | 10.2% | 10.2% |
| **350°C-500°C** | wt/wt_{FEED} | 17.3% | 17.2% | 16.9% |
| **500°C+ - Ins-C₅** | wt/wt_{FEED} | 64.9% | 61.4% | 65.0% |
| **THFi** | wt/wt_{FEED} | 0.5% | 2.6% | 3.4% |

The THERMAL base case represents the reactivity of the vacuum residue alone in thermal conversion conditions. The polymeric charge is insoluble in tetrahydrofuran and constitutes the THF-i fraction present in the charge.

In case 5 a vacuum residue charge was treated, added to 5% of mechanically pre-treated polymeric charge (see the Case 5 description of the mixture preparation) while in case 6 a vacuum residue mixture was prepared, added to 5% of mechanically pre-treated polymeric charge so as to obtain particles with D50<0.2mm. From the comparison of the base case with the cases in which the polymeric charge is added, it can be observed that in thermal conversion process conditions the naphtha yield is in any case lower than in the base case. At the same time there is evidence of a decrease in the conversion of the polymeric charge, as the THF-i are much higher at the end of the test. Considering the THF-i at the end of the test as an unconverted polymeric charge, it can be observed that the conversion in Case 5 is greater than in Case 6. Comparing the two cases (5 and 6) the increase in gas yields (C1-C4) and naphtha cut in Case 5 can be observed, indicating that the polymeric charge converts to light products even in a thermal conversion process, but predominantly with C1-C4 gaseous compounds.

## Claims

1. A process for polymer mixture hydroconversion which comprises the following steps:
• pre-treating a polymer mixture through methods selected from mechanical methods, chemical methods, thermal methods, or combinations thereof, making the polymer mixture miscible or suspendable in a vacuum residue and forming a pre-treated charge;
• mixing said pre-treated charge with a vacuum hydrocarbon residue, optionally pre-heated, to form a reactant mixture;
• feeding to a hydroconversion section the reactant mixture in slurry phase, an oleosoluble precursor of a catalyst containing Molybdenum, which is fed to the hydroconversion section in liquid phase, and a stream containing hydrogen; and carrying out a hydroconversion reaction producing a reaction effluent, wherein the catalyst used during the hydroconversion reaction is generated *in situ* by the oleosoluble precursor;
• separating the reaction effluent into at least one high-pressure and high-temperature separator in a vapour phase and a slurry phase;
• then sending the separated vapour phase to a gas treatment section with the function of separating a liquid fraction from the gas containing hydrogen and hydrocarbon gases having from 1 to 4 carbon atoms; said liquid fraction comprising naphtha, atmospheric gas oil (AGO), vacuum gas oil (VGO);
• then sending the slurry phase to a separation section that has the function of separating the fractions of Oil Vacuum (VGO), Heavy Vacuum Gas Oil (HVGO), Light Vacuum Gas Oil (LVGO), Atmospheric Gas Oil (AGO), from a stream of heavy organic products which contains asphaltenes, unconverted charge, catalyst and solid formed during the hydroconversion reaction;
• recirculating a portion of said heavy organic products to the hydroconversion section, or mixing them with the pre-treated charge before being fed into the hydroconversion, and with the remainder forming a purge stream.

2. Process according to claim 1, wherein the mixture of polymers in solid phase comprises:
- one or more polymers selected from:
• Ethylene polymers or copolymers and mixtures thereof;
• Propylene polymers or copolymers and mixtures thereof;
• Styrene polymers or copolymers and mixtures thereof;
• Polymers or copolymers of vinyl chloride or copolymers of vinilidene dichloride, and mixtures thereof;
• Polyesters;
• Polyamides;
• Polymers containing urethane bonds;
• Polymers deriving from cellulose;
• mixtures thereof;
- optionally organic or inorganic source additives.

3. Process according to claim 2, wherein the ethylene polymers or copolymers are selected from high-density polyethylene (HDPE), low-density polyethylene (LDPE), linear low-density polyethylene (LLDPE), very low density polyethylene (VLDPE), ultra low density polyethylene (ULDPE), metallocene catalytic polyethylene (m-PE), ethylene-vinyl acetate (EVA) polymers, and mixtures thereof.

4. Process according to claim 2, wherein the propylene polymers or copolymers are selected from polypropylene (PP) or ethylene propylene diene monomer rubbers (EPDM), and mixtures thereof.

5. Process according to claim 2, wherein the styrene polymers or copolymers are selected from polystyrene (PS), expandable polystyrene (EPS), high impact polystyrene (HIPS), acrylonitrile-styrene-butadiene polymers (ABS), styrene-acrylonitrile copolymers (SAN), styrene-butadiene-styrene block copolymer (SBS), styrene-ethylene-butylene-styrene block copolymers (SEBS), and mixtures thereof.

6. Process according to claim 2, wherein the polymers or copolymers of vinyl chloride and vinylidene dichloride are selected from polyvinyl chloride (PVC), polyvinylchloride (PVDC) and its copolymers, and mixtures thereof.

7. Process according to claim 2, wherein the polyesters are selected from polycarbonate (PC), polyethylene terephthalate (PET), polytrimethylene terephthalate (PTT), polybutylene terephthalate (PBT), poly lactic acid (PLA), poly (L- lactic acid) (PLLA), poly (D-lactic acid) (PDLA), poly (D, L-lactic acid) (PDLLA), polyhydroxyalkanoate (PHA).

8. Process according to claim 2, wherein the polyamides are selected from nylon 6 (PA6), nylon 66 (PA66), nylon 46 (PA46), nylon 12 (PA12), and mixtures thereof.

9. Process according to claim 2, wherein the polymers containing urethane bonds are selected from polyurethanes (PU) containing aliphatic, or aromatic, or ester, or ether, or urea groups, and mixtures thereof.

10. Process according to claim 2, wherein the cellulose-derived polymers are selected from cellulose nitrate, cellulose acetate, cellulose acetate-butyrate, cellulose propionate, ethyl cellulose, carboxymethylcellulose, hydroxyethyl cellulose, benzyl cellulose and regenerated cellulose, and mixtures thereof.

11. Process according to any one of claims 1 to 10, wherein the slurry phase hydroconversion reactor is a bubble reactor.

12. Process according to any one of claims 1 to 11, wherein the reaction takes place in one or more hydroconversion reactors placed in parallel and similarly the separation of the effluent takes place in one or more high-pressure and high-temperature separators placed in parallel.

13. Process according to any one of claims 1 to 12, wherein the vapour treatment section comprises heat exchangers interspersed with a washing column, a high-pressure and medium-temperature separator, a high-pressure and low-temperature separator.

14. Process according to any one of claims 1 to 13, wherein said liquid separation section comprises a high-temperature and low-pressure separator which functions as an accumulator; a pre-flash column, possibly a stripper to separate the light, and finally a vacuum distillation column to recover the VGO fraction, the LVGO fraction, the HVGO fraction, the Wash Oil and the Vacuum residue.

15. Process according to any one of claims 1 to 14, wherein the mechanical pre-treatment is selected from grinding and cryogenic grinding.

16. Process according to any of claims 1 to 14, wherein the chemical pre-treatment is selected from:
o preparing the polymers mixture in an acid or basic atmosphere at room temperature, preferably selected from an aqueous solution of H₂SO₄ at 10% w/w, an aqueous solution of NaOH at 10% w/w, an aqueous solution of Ca(OH)₂ at 10% w/w;
o preparing the polymers mixture with hydrocarbon compounds, at low or high molecular weight at room temperature; preferably selected from "styrene residues" and/or "phenolic residues".

17. Process according to any one of claims 1 to 14, wherein the thermal pre-treatment involves heating the polymers mixture at a temperature greater than or equal to 200°C in an inert atmosphere.

18. Process according to any one of claims 1 to 14, wherein the pre-treatment is selected from the following methods:
▪ the polymer mixture is ground, preferably with cryogenic grinding; then the ground polymer mixture is added to acids or bases at room temperature, preferably selected from an aqueous solution of H₂SO₄ at 10% w/w, an aqueous solution of NaOH at 10% w/w, an aqueous solution of Ca(OH)₂ at 10% w/w, styrene residues and/or phenol residues; or
▪ the polymer mixture is ground, preferably with cryogenic grinding; then the ground polymeric mixture is heated to a temperature T greater than or equal to 200°C in an inert atmosphere; or
▪ the polymer mixture is heated to a temperature greater than or equal to 200°C in an inert atmosphere, then the heated polymer mixture is added to acids or bases at room temperature, preferably selected from an aqueous solution of H₂SO₄ at 10% w/w, an aqueous solution of NaOH at 10% w/w, an aqueous solution of Ca(OH)₂ at 10% w/w, styrene residues and/or phenol residues.

19. Process according to any one of claims 1 to 14, wherein the purge is treated as follows:
• heating to a temperature comprised between 185°C-220°C;
• the hot purge is cooled by progressively and in a controlled manner lowering the temperature to the minimum temperature of 100°C without stirring the purge, so as to form a light or clarified phase, and a heavy phase or cake depending on the density;

20. Process according to claim 19, wherein the controlled progressive lowering of the temperature can occur in different ways:
by using an adequately sized and thermostated tank, or
• by mixing the heated purge with a cold stream, preferably the clarified phase, considering the appropriate thermal balance of the process for calculating the flow rates.

21. Process according to any one of claims 1 to 20, wherein the time necessary for the formation of a heavy phase or cake varies from 15 minutes to 2 hours.

22. Process according to any one of claims 1 to 21, wherein the sedimentation speed is comprised between 85 mm/hour and 300 mm/hour.

23. Process according to any one of claims 1 to 22, wherein the clarified is mixed with the pre-treated charge or is recycled to the hydroconversion section.

24. Process according to any one of claims 1 to 23, wherein the purge is treated as follows:
• the purge is mixed, at a temperature greater than or equal to 100°C, with a mixture of hydrocarbons or flux that has a total aromatic content comprised between 50% and 70% by weight, and a starting boiling point equal to or greater than the temperature at which the mixing is conducted, so as to form a suspension with a content greater than or equal to 10% by weight of compounds having a boiling point T_{bp} less than or equal to 350°C;
• said suspension is then subjected to a liquid-solid separation stage, which operates at a temperature greater than or equal to 100°C, separating a solid phase containing a residual organic component and a solid component, cake, and a liquid phase containing solid residues;
• cooling the solid phase (cake) thus obtained below 60°C, including the upper end, and maintaining a temperature lower than or equal to 60°C.

25. Process according to claim 24, wherein the liquid-solid separation is carried out by filtration or by using a centrifugal decanting device (centrifugation) which operates at temperature.

26. Process according to any one of claims 1 to 25, wherein the catalyst precursor is Mo 2-ethylhexanoic acid (2-ethylhexanoate) solution, containing 15.5% by weight of Mo.

27. Process according to any one of claims 1 to 26, wherein the hydroconversion reactors and high-pressure and temperature separators operate in a temperature range comprised between 420°C and 440°C, at a pressure comprised between 155 atm and 160 atm.

## Patentansprüche

1. Verfahren zur Hydrokonversion eines Polymergemischs, das die folgenden Schritte umfasst:
• Vorbehandeln eines Polymergemischs durch Verfahren, die aus mechanischen Verfahren, chemischen Verfahren, thermischen Verfahren oder Kombinationen davon ausgewählt sind, wodurch das Polymergemisch in einem Vakuumrückstand mischbar oder suspendierbar gemacht und eine vorbehandelte Charge bzw. Beschickung gebildet wird;
• Mischen der vorbehandelten Charge mit einem, optional vorgewärmten, Kohlenwasserstoff-Vakuumrückstand, um ein Reaktionsmittelgemisch zu bilden;
• Zuführen, zu einem Hydrokonversionsabschnitt, des Reaktionsmittelgemischs in Slurry-Phase, eines öllöslichen Vorläufers eines Molybdän-haltigen Katalysators, der dem Hydrokonversionsabschnitt in Flüssigphase zugeführt wird, und eines wasserstoffhaltigen Stroms; und Durchführen einer Hydrokonversionsreaktion unter Erzeugung eines Reaktionsaustrags, wobei der während der Hydrokonversionsreaktion verwendete Katalysator *in situ* durch den bzw. aus dem öllöslichen Vorläufer erzeugt wird;
• Trennen des Reaktionsaustrags in zumindest einem Hochdruck- und Hochtemperaturseparator in eine Dampfphase und eine Slurry-Phase;
• anschließendes Leiten der abgetrennten Dampfphase zu einem Gasbehandlungsabschnitt mit der Funktion, einen flüssigen Anteil von dem Gas zu trennen, welches Wasserstoff und Kohlenwasserstoffgase mit 1 bis 4 Kohlenstoffatomen enthält; wobei der flüssige Anteil Naphtha, atmosphärisches Gasöl (AGO) und Vakuumgasöl (VGO) umfasst;
• anschließendes Leiten der Slurry-Phase zu einem Trennabschnitt mit der Funktion, die Anteile von Vakuumgasöl (VGO), schweres Vakuumgasöl (HVGO), leichtes Vakuumgasöl (LVGO) und atmosphärisches Gasöl (AGO) von einem Strom schwerer organischer Produkte zu trennen, der Asphaltene, nicht umgesetzte Charge, Katalysator und während der Hydrokonversionsreaktion gebildeten Feststoff enthält;
• Rückführen eines Teils der schweren organischen Produkte in den Hydrokonversionsabschnitt oder Mischen desselben mit der vorbehandelten Charge vor deren Zuführung in die Hydrokonversion, und wobei der Rückstand einen Spülstrom bildet.

2. Verfahren nach Anspruch 1, wobei das Gemisch aus Polymeren in fester Phase umfasst:
- ein oder mehrere Polymere, ausgewählt aus:
• Ethylen-Polymeren oder -Copolymeren und Gemischen davon;
• Propylen-Polymeren oder -Copolymeren und Gemischen davon;
• Styrol-Polymeren oder -Copolymeren und Gemischen davon;
• Polymeren oder Copolymeren von Vinylchlorid oder Copolymeren von Vinylidendichlorid und Gemischen davon;
• Polyestern;
• Polyamiden;
• Polymeren, die Urethanbindungen enthalten;
• Polymeren, die von Cellulose abgeleitet sind;
• Gemischen davon;
- Optional Additive organischer oder anorganischer Quelle.

3. Verfahren nach Anspruch 2, wobei die Ethylenpolymere oder -copolymere ausgewählt sind aus Polyethylen hoher Dichte (HDPE), Polyethylen niedriger Dichte (LDPE), linearem Polyethylen niedriger Dichte (LLDPE), Polyethylen sehr niedriger Dichte (VLDPE), Polyethylen ultraniedriger Dichte (ULDPE), Metallocen-katalysiertem Polyethylen (m-PE), Ethylen-Vinylacetat-(EVA)-Polymeren und Gemischen davon.

4. Verfahren nach Anspruch 2, wobei die Propylenpolymere oder -copolymere ausgewählt sind aus Polypropylen (PP) oder Ethylen-Propylen-Dien-Monomerkautschuken (EPDM) und Gemischen davon.

5. Verfahren nach Anspruch 2, wobei die Styrolpolymere oder -copolymere ausgewählt sind aus Polystyrol (PS), expandierbarem Polystyrol (EPS), schlagzähem Polystyrol (HIPS), Acrylnitril-Styrol-Butadien-Polymeren (ABS), Styrol-Acrylnitril-Copolymeren (SAN), Styrol-Butadien-Styrol-Blockcopolymer (SBS), Styrol-Ethylen-Butylen-Styrol-Blockcopolymeren (SEBS) und Gemischen davon.

6. Verfahren nach Anspruch 2, wobei die Polymere oder Copolymere von Vinylchlorid und Vinylidendichlorid ausgewählt sind aus Polyvinylchlorid (PVC), Polyvinylidenchlorid (PVDC) und dessen Copolymeren sowie Gemischen davon.

7. Verfahren nach Anspruch 2, wobei die Polyester ausgewählt sind aus Polycarbonat (PC), Polyethylenterephthalat (PET), Polytrimethylenterephthalat (PTT), Polybutylenterephthalat (PBT), Polymilchsäure (PLA), Poly(L-Milchsäure) (PLLA), Poly(D-Milchsäure) (PDLA), Poly(D,L-Milchsäure) (PDLLA) und Polyhydroxyalkanoaten (PHA).

8. Verfahren nach Anspruch 2, wobei die Polyamide ausgewählt sind aus Nylon 6 (PA6), Nylon 66 (PA66), Nylon 46 (PA46), Nylon 12 (PA12) und Gemischen davon.

9. Verfahren nach Anspruch 2, wobei die Urethanbindungen enthaltenden Polymere ausgewählt sind aus Polyurethanen (PU), die aliphatische, oder aromatische, oder Ester-, oder Ether- oder Harnstoffgruppen enthalten, sowie Gemischen davon.

10. Verfahren nach Anspruch 2, wobei die von Cellulose abgeleiteten Polymere ausgewählt sind aus Cellulosenitrat, Celluloseacetat, Celluloseacetatbutyrat, Cellulosepropionat, Ethylcellulose, Carboxymethylcellulose, Hydroxyethylcellulose, Benzylcellulose und regenerierter Cellulose sowie Gemischen davon.

11. Verfahren nach einem der Ansprüche 1 bis 10, wobei der Hydrokonversionsreaktor für die Slurry-Phase ein Blasenreaktor ist.

12. Verfahren nach einem der Ansprüche 1 bis 11, wobei die Reaktion in einem oder mehreren parallel platzierten Hydrokonversionsreaktoren erfolgt und die Trennung des Austrags gleichermaßen in einem oder mehreren parallel platzierten Hochdruck- und Hochtemperaturseparatoren erfolgt.

13. Verfahren nach einem der Ansprüche 1 bis 12, wobei der Dampfbehandlungsabschnitt Wärmetauscher, zwischengeschaltet mit einer Waschkolonne, einen Hochdruck- und Mitteltemperaturseparator sowie einen Hochdruck- und Niedrigtemperaturseparator umfasst.

14. Verfahren nach einem der Ansprüche 1 bis 13, wobei der Flüssigkeitstrennabschnitt einen Hochtemperatur- und Niedrigdruckseparator, der als ein Akkumulator fungiert; eine Vor-Flash-Kolonne, gegebenenfalls einen Abstreifer zum Abtrennen der leichten Bestandteile, und schließlich eine Vakuumdestillationskolonne zur Rückgewinnung des VGO-Anteils, des LVGO-Anteils, des HVGO-Anteils, des Waschöls und des Vakuumrückstands umfasst.

15. Verfahren nach einem der Ansprüche 1 bis 14, wobei die mechanische Vorbehandlung aus Mahlen und kryogenem Mahlen ausgewählt ist.

16. Verfahren nach einem der Ansprüche 1 bis 14, wobei die chemische Vorbehandlung ausgewählt ist aus:
∘ Behandeln des Polymergemischs in einer sauren oder basischen Atmosphäre bei Raumtemperatur, vorzugsweise ausgewählt aus einer wässrigen H₂SO₄-Lösung bei 10% w/w, einer wässrigen NaOH-Lösung bei 10% w/w, einer wässrigen Ca(OH)₂-Lösung bei 10% w/w;
∘ Behandeln des Polymergemischs mit Kohlenwasserstoffverbindungen mit niedrigem oder hohem Molekulargewicht bei Raumtemperatur; vorzugsweise ausgewählt aus "Styrolrückständen" und/oder "Phenolrückständen".

17. Verfahren nach einem der Ansprüche 1 bis 14, wobei die thermische Vorbehandlung ein Erhitzen des Polymergemischs auf eine Temperatur von größer als oder gleich 200°C in einer Inertatmosphäre beinhaltet.

18. Verfahren nach einem der Ansprüche 1 bis 14, wobei die Vorbehandlung aus den folgenden Verfahren ausgewählt ist:
▪ das Polymergemisch wird gemahlen, vorzugsweise durch kryogenes Mahlen; anschließend wird das gemahlene Polymergemisch bei Raumtemperatur Säuren oder Basen zugesetzt, vorzugsweise ausgewählt aus einer wässrigen H₂SO₄-Lösung bei 10% w/w, einer wässrigen NaOH-Lösung bei 10% w/w, einer wässrigen Ca(OH)₂-Lösung bei 10% w/w, Styrolrückständen und/oder Phenolrückständen; oder
▪ das Polymergemisch wird gemahlen, vorzugsweise durch kryogenes Mahlen; anschließend wird das gemahlene Polymergemisch in einer Inertatmosphäre auf eine Temperatur T von größer als oder gleich 200°C erhitzt; oder
▪ das Polymergemisch wird in einer Inertatmosphäre auf eine Temperatur von größer als oder gleich 200°C erhitzt, anschließend wird das erhitzte Polymergemisch bei Raumtemperatur Säuren oder Basen zugesetzt, vorzugsweise ausgewählt aus einer wässrigen H₂SO₄-Lösung bei 10% w/w, einer wässrigen NaOH-Lösung bei 10% w/w, einer wässrigen Ca(OH)₂-Lösung bei 10% w/w, Styrolrückständen und/oder Phenolrückständen.

19. Verfahren nach einem der Ansprüche 1 bis 14, wobei der Spülstrom wie folgt behandelt wird:
• Erhitzen auf eine Temperatur, die zwischen 185°C bis 220°C liegt;
• Abkühlen des heißen Spülstroms durch schrittweise und kontrollierte Absenkung der Temperatur auf die Mindesttemperatur von 100°C ohne Rühren des Spülstroms, sodass sich eine leichte oder geklärte Phase sowie eine schwere Phase oder ein Filterkuchen bilden, abhängig von der Dichte.

20. Verfahren nach Anspruch 19, wobei die kontrollierte schrittweise Absenkung der Temperatur auf verschiedene Weise erfolgen kann:
• durch Verwendung eines passend dimensionierten und thermostatisierten Tanks, oder
• durch Mischen des erhitzten Spülstroms mit einem kalten Strom, vorzugsweise der geklärten Phase, unter Berücksichtigung der geeigneten Wärmebilanz des Verfahrens zur Berechnung der Durchflussraten.

21. Verfahren nach einem der Ansprüche 1 bis 20, wobei die für die Bildung einer schweren Phase oder eines Filterkuchens erforderliche Zeit zwischen 15 Minuten und 2 Stunden variiert.

22. Verfahren nach einem der Ansprüche 1 bis 21, wobei die Sedimentationsgeschwindigkeit zwischen 85 mm/Stunde und 300 mm/Stunde liegt.

23. Verfahren nach einem der Ansprüche 1 bis 22, wobei das Geklärte mit der vorbehandelten Charge vermischt oder in den Hydrokonversionsabschnitt recycelt bzw. zurückgeführt wird.

24. Verfahren nach einem der Ansprüche 1 bis 23, wobei der Spülstrom wie folgt behandelt wird:
• der Spülstrom wird bei einer Temperatur von größer als oder gleich 100°C mit einem Gemisch aus Kohlenwasserstoffen oder einem Flussmittel vermischt, das einen Gesamtaromatengehalt zwischen 50 und 70 Gew.-% sowie einen Anfangssiedepunkt aufweist, der gleich oder höher ist als die Temperatur, bei der die Vermischung durchgeführt wird, sodass eine Suspension mit einem Gehalt von größer als oder gleich 10 Gew.-% an Verbindungen mit einem Siedepunkt T_{bp} von kleiner als oder gleich 350°C gebildet wird;
• die Suspension wird anschließend einer Flüssig-Fest-Trennungsstufe unterzogen, die bei einer Temperatur von größer als oder gleich 100°C arbeitet, wodurch eine Feststoffphase, die einen organischen Restbestandteil und einen Feststoffbestandteil enthält, Filterkuchen, und eine Feststoffrückstände enthaltende Flüssigphase getrennt werden;
• die so erhaltene Feststoffphase (Filterkuchen) wird auf eine Temperatur von unterhalb 60°C, einschließlich des oberen Endes, abgekühlt und es wird eine Temperatur von kleiner als oder gleich 60°C aufrechterhalten.

25. Verfahren nach Anspruch 24, wobei die Flüssig-Feststoff-Trennung durch Filtration oder durch Verwendung einer Zentrifugaldekantiervorrichtung (Zentrifugierung) durchgeführt wird, die bei Temperatur arbeitet.

26. Verfahren nach einem der Ansprüche 1 bis 25, wobei der Katalysatorvorläufer Mo-2-Ethylhexansäure(2-Ethylhexanoat)-Lösung mit einem Mo-Gehalt von 15,5 Gew.-% ist.

27. Verfahren nach einem der Ansprüche 1 bis 26, wobei die Hydrokonversionsreaktoren und Hochdruck- und Hochtemperaturseparatoren in einem Temperaturbereich zwischen 420°C bis 440°C bei einem Druck zwischen 155 atm bis 160 atm arbeiten.

## Revendications

1. Procédé d'hydroconversion de mélanges de polymères qui comporte les étapes suivantes :
• prétraitement d'un mélange de polymères par des procédés choisis parmi des procédés mécaniques, des procédés chimiques, des procédés thermiques, ou des combinaisons de ceux-ci, ce qui permet au mélange de polymères d'être mélangé ou suspendu dans un résidu sous vide et forme une charge prétraitée ;
• mélange de ladite charge prétraitée avec un résidu d'hydrocarbures sous vide, éventuellement préchauffé, afin de former un mélange réactif ;
• introduction dans une section d'hydroconversion du mélange réactif en phase de suspension, d'un précurseur oléosoluble d'un catalyseur contenant du molybdène, qui est introduit dans la section d'hydroconversion en phase liquide, et d'un flux contenant de l'hydrogène ; et réalisation d'une réaction d'hydroconversion produisant un effluent de réaction, dans lequel le catalyseur utilisé lors de la réaction d'hydroconversion est généré *in situ* par le précurseur oléosoluble ;
• séparation de l'effluent de réaction dans au moins un séparateur à haute pression et à haute température en phase vapeur et en phase de suspension ;
• puis envoi de la phase vapeur séparée à une section de traitement des gaz ayant pour fonction de séparer une fraction liquide du gaz contenant de l'hydrogène et des gaz hydrocarbures comportant de 1 à 4 atomes de carbone ; ladite fraction liquide comportant du naphta, du gazole atmosphérique (AGO), du gazole sous vide (VGO) ;
• puis envoi de la phase de suspension à une section de séparation ayant pour fonction de séparer les fractions de gazole sous vide (VGO), de gazole lourd sous vide (HVGO), de gazole léger sous vide (LVGO) et de gazole atmosphérique (AGO), d'un flux de produits organiques lourds contenant des asphaltènes, une charge non convertie, un catalyseur et des solides formés lors de la réaction d'hydroconversion ;
• mise en recirculation d'une partie desdits produits organiques lourds vers la section d'hydroconversion, ou mélange de ceux-ci avec la charge prétraitée avant leur introduction dans l'hydroconversion, le reste formant un flux de purge.

2. Procédé selon la revendication 1, dans lequel le mélange de polymères en phase solide comporte :
- un ou plusieurs polymères choisis parmi :
• des polymères ou copolymères d'éthylène et leurs mélanges ;
• des polymères ou copolymères de propylène et leurs mélanges ;
• des polymères ou copolymères de styrène et leurs mélanges ;
• des polymères ou copolymères de chlorure de vinyle ou des copolymères de dichlorure de vinylidène, et leurs mélanges ;
• des polyesters ;
• des polyamides ;
• des polymères contenant des liaisons uréthane ;
• des polymères dérivés de la cellulose ;
• ou des mélanges de ceux-ci ;
- éventuellement, des additifs de source organique ou inorganique.

3. Procédé selon la revendication 2, dans lequel les polymères ou copolymères d'éthylène sont choisis parmi le polyéthylène haute densité (HDPE), le polyéthylène basse densité (LDPE), le polyéthylène basse densité linéaire (LLDPE), le polyéthylène très basse densité (VLDPE), le polyéthylène ultra basse densité (ULDPE), le polyéthylène catalysé par métallocène (m-PE), les polymères éthylène-acétate de vinyle (EVA), et leurs mélanges.

4. Procédé selon la revendication 2, dans lequel les polymères ou copolymères de propylène sont choisis parmi le polypropylène (PP) ou les caoutchoucs éthylène-propylène-diène monomère (EPDM), et leurs mélanges.

5. Procédé selon la revendication 2, dans lequel les polymères ou copolymères de styrène sont choisis parmi le polystyrène (PS), le polystyrène expansé (EPS), le polystyrène à haute résistance aux chocs (HIPS), les polymères acrylonitrile-styrène-butadiène (ABS), les copolymères styrène-acrylonitrile (SAN), le copolymère à blocs styrène-butadiène-styrène (SBS), les copolymères à blocs styrène-éthylène-butylène-styrène (SEBS), et leurs mélanges.

6. Procédé selon la revendication 2, dans lequel les polymères ou copolymères de chlorure de vinyle et de dichlorure de vinylidène sont choisis parmi le polychlorure de vinyle (PVC), le polyvinylchlorure (PVDC) et ses copolymères, ainsi que leurs mélanges.

7. Procédé selon la revendication 2, dans lequel les polyesters sont choisis parmi le polycarbonate (PC), le polyéthylène téréphtalate (PET), le polytriméthylène téréphtalate (PTT), le polybutylène téréphtalate (PBT), l'acide polylactique (PLA), le poly (acide L-lactique) (PLLA), le poly (acide D-lactique) (PDLA), le poly (acide D,L-lactique) (PDLLA), le polyhydroxyalcanoate (PHA).

8. Procédé selon la revendication 2, dans lequel les polyamides sont choisis parmi le nylon 6 (PA6), le nylon 66 (PA66), le nylon 46 (PA46), le nylon 12 (PA12), et leurs mélanges.

9. Procédé selon la revendication 2, dans lequel les polymères contenant des liaisons uréthane sont choisis parmi les polyuréthanes (PU) contenant des groupes aliphatiques, aromatiques, ester, éther ou urée, ainsi que leurs mélanges.

10. Procédé selon la revendication 2, dans lequel les polymères dérivés de la cellulose sont choisis parmi le nitrate de cellulose, l'acétate de cellulose, l'acétate-butyrate de cellulose, le propionate de cellulose, l'éthylcellulose, la carboxyméthylcellulose, l'hydroxyéthylcellulose, la benzylcellulose et la cellulose régénérée, ainsi que leurs mélanges.

11. Procédé selon l'une quelconque des revendications 1 à 10, dans lequel le réacteur d'hydroconversion en phase de suspension est un réacteur à bulles.

12. Procédé selon l'une quelconque des revendications 1 à 11, dans lequel la réaction a lieu dans un ou plusieurs réacteurs d'hydroconversion placés en parallèle et de même, la séparation de l'effluent a lieu dans un ou plusieurs séparateurs à haute pression et à haute température placés en parallèle.

13. Procédé selon l'une quelconque des revendications 1 à 12, dans lequel la section de traitement de vapeur comporte des échangeurs de chaleur entre lesquels une colonne de lavage, un séparateur à haute pression et à température moyenne, un séparateur à haute pression et à basse température sont intercalés.

14. Procédé selon l'une quelconque des revendications 1 à 13, dans lequel ladite section de séparation de liquides comporte un séparateur à haute température et à basse pression qui fonctionne comme un accumulateur ; une colonne de préflash, éventuellement un strippeur pour séparer les légers, et enfin une colonne de distillation sous vide pour récupérer la fraction VGO, la fraction LVGO, la fraction HVGO, l'huile de lavage et le résidu sous vide.

15. Procédé selon l'une quelconque des revendications 1 à 14, dans lequel le prétraitement mécanique est choisi parmi le broyage et le broyage cryogénique.

16. Procédé selon l'une quelconque des revendications 1 à 14, dans lequel le prétraitement chimique est choisi parmi :
∘ préparation du mélange de polymères dans une atmosphère acide ou basique à température ambiante, de préférence choisie parmi une solution aqueuse de H₂SO₄ à 10 % p/p, une solution aqueuse de NaOH à 10 % p/p, une solution aqueuse de Ca(OH)₂ à 10 % p/p ;
∘ préparation du mélange de polymères avec des composés hydrocarburés, de poids moléculaire faible ou élevé à température ambiante ; de préférence choisis parmi les « résidus de styrène » et/ou les « résidus phénoliques ».

17. Procédé selon l'une quelconque des revendications 1 à 14, dans lequel le prétraitement thermique consiste à chauffer le mélange de polymères à une température supérieure ou égale à 200 °C dans une atmosphère inerte.

18. Procédé selon l'une quelconque des revendications 1 à 14, dans lequel le prétraitement est choisi parmi les procédés suivants :
▪ le mélange de polymères est broyé, de préférence par broyage cryogénique ; puis le mélange de polymères broyé est ajouté à des acides ou des bases à température ambiante, de préférence choisis parmi une solution aqueuse de H₂SO₄ à 10 % p/p, une solution aqueuse de NaOH à 10 % p/p, une solution aqueuse de Ca(OH)₂ à 10 % p/p, des résidus de styrène et/ou des résidus phénoliques ; ou
▪ le mélange de polymères est broyé, de préférence par broyage cryogénique ; puis le mélange polymérique broyé est chauffé à une température T supérieure ou égale à 200 °C dans une atmosphère inerte ; ou
▪ le mélange de polymères est chauffé à une température supérieure ou égale à 200°C dans une atmosphère inerte, puis le mélange de polymères chauffé est ajouté à des acides ou des bases à température ambiante, de préférence choisis parmi une solution aqueuse de H₂SO₄ à 10 % p/p, une solution aqueuse de NaOH à 10 % p/p, une solution aqueuse de Ca(OH)₂ à 10 % p/p, des résidus de styrène et/ou des résidus phénoliques.

19. Procédé selon l'une quelconque des revendications 1 à 14, dans lequel la purge est traitée comme suit :
• chauffage à une température comprise entre 185 °C et 220 °C ;
• la purge chaude est refroidie en abaissant progressivement et de manière contrôlée la température jusqu'à la température minimale de 100 °C sans agiter la purge, afin de former une phase légère ou clarifiée, et une phase lourde ou gâteau selon la densité ;

20. Procédé selon la revendication 19, dans lequel l'abaissement progressif contrôlé de la température peut se produire de différentes manières :
• en utilisant un réservoir de taille adéquate et thermostaté, ou
• en mélangeant la purge chauffée avec un flux froid, de préférence la phase clarifiée, en tenant compte de l'équilibre thermique approprié du procédé pour le calcul des débits.

21. Procédé selon l'une quelconque des revendications 1 à 20, dans lequel le temps nécessaire à la formation d'une phase lourde ou gâteau varie de 15 minutes à 2 heures.

22. Procédé selon l'une quelconque des revendications 1 à 21, dans lequel la vitesse de sédimentation est comprise entre 85 mm/heure et 300 mm/heure.

23. Procédé selon l'une quelconque des revendications 1 à 22, dans lequel le clarifié est mélangé avec la charge prétraitée ou est recyclé vers la section d'hydroconversion.

24. Procédé selon l'une quelconque des revendications 1 à 23, dans lequel la purge est traitée comme suit :
• la purge est mélangée, à une température supérieure ou égale à 100 °C, avec un mélange d'hydrocarbures ou de flux présentant une teneur totale en aromatiques comprise entre 50 % et 70 % en poids, et un point de début d'ébullition égal ou supérieur à la température à laquelle le mélange est réalisé, de manière à former une suspension avec une teneur supérieure ou égale à 10 % en poids de composés présentant un point d'ébullition T_{bP} inférieur ou égal à 350 °C ;
• ladite suspension est ensuite soumise à une étape de séparation liquide-solide, qui fonctionne à une température supérieure ou égale à 100 °C, séparant une phase solide contenant un composant organique résiduel et un composant solide, gâteau, et une phase liquide contenant des résidus solides ;
• refroidissement de la phase solide (gâteau) ainsi obtenue en dessous de 60 °C, incluant la limite supérieure, et maintien d'une température inférieure ou égale à 60 °C.

25. Procédé selon la revendication 24, dans lequel la séparation liquide-solide est réalisée par filtration ou par utilisation d'un dispositif de décantation centrifuge (centrifugation) fonctionnant à température.

26. Procédé selon l'une quelconque des revendications 1 à 25, dans lequel le précurseur de catalyseur est une solution d'acide 2-éthylhexanoïque (2-éthylhexanoate) de Mo, contenant 15,5 % en poids de Mo.

27. Procédé selon l'une quelconque des revendications 1 à 26, dans lequel les réacteurs d'hydroconversion et les séparateurs à haute pression et température fonctionnent dans une plage de températures comprise entre 420 °C et 440 °C, à une pression comprise entre 155 atm et 160 atm.
